# EUROPÄISCHE PATENTSCHRIFT

(11) **EP 4 036 425 B1**
(45) Veröffentlichungstag und Bekanntmachung des Hinweises auf die Patenterteilung: **07.06.2023**
(21) Anmeldenummer: 21153738.6
(22) Anmeldetag: 27.01.2021
(51) Int. Cl.: F16B 12/20

(54) **VERBINDER FÜR ZWEI BAUTEILE**
CONNECTOR FOR TWO COMPONENTS
CONNECTEUR POUR DEUX COMPOSANTS

(43) Veröffentlichungstag der Anmeldung: 03.08.2022
(62) Teilanmeldung aus: 21199860.4
(73) Patentinhaber: Knapp GmbH, 3324 Euratsfeld (AT)
(72) Erfinder: KNAPP, Friedrich, 4362 Bad Kreuzen (AT)
(74) Vertreter: Weiser & Voith Patentanwälte Partnerschaft

(56) Entgegenhaltungen:
- DE-A1- 2 950 297
- DE-U1-202015 100 252
- US-A- 2 540 468
- US-A- 4 045 927

## Beschreibung

Die vorliegende Erfindung betrifft einen Verbinder für zwei Bauteile, insbesondere Holzbauteile, mit zwei Beschlägen, von denen der eine am einen Bauteil und der andere am anderen Bauteil verankerbar ist. Die Erfindung bezieht sich insbesondere auf Verbinder für solche Bauteile, von denen zumindest einer eine Nut zum Einstecken des jeweiligen Beschlags hat.

Verbinder dieser Art sind beispielsweise aus der DE 196 04 243 C2 oder der DE 10 2014 101 158 A1 bekannt. Diese Verbinder sind für Bauteile mit Nuten mit kreisbogenförmigen Hinterschneidungen vorgesehen, für welche der jeweilige Beschlag kreisbogenförmige Rippen zum Eingriff in die Hinterschneidungen hat. Zum Verankern des Beschlags am zugehörigen Bauteil wird der Beschlag in die Nut von deren Ende her in einer kreisbogenförmigen Bewegung eingeschoben und ist dann durch die Hinterschneidungen gegen ein Herausziehen aus dem Bauteil quer zur Nut gesichert.

Ein Nachteil der bekannten Verbinder, wie beispielsweise in US 4,045,927 A, DE 29 50 297 A1 und US 2,540,468 beschrieben, ist, dass der Beschlag sich in der Nut in Nutlängsrichtung verschieben kann, wodurch schlimmstenfalls die Bauteile auseinanderfallen können. In der DE 10 2014 101 158 A1 wurde daher vorgeschlagen, im jeweiligen Bauteil zusätzlich eine die Nut querende Bohrung vorzusehen, die zur Aufnahme eines Exzenters oder einer Antriebswelle für einen Verriegelungshaken verwendet werden kann, der in den gegenüberliegenden Beschlag einhaken kann, um die Beschläge gegeneinander zu spannen. Gleichzeitig verhindert der in die Bohrung des Bauteils eingeschobene Exzenter ein Herausgleiten des Beschlags in Nutlängsrichtung. Diese Konstruktion ist jedoch mechanisch aufwendig und für einen Einsatz als kostengünstiger Massenartikel wenig geeignet.

Die Erfindung setzt sich zum Ziel, die Nachteile des genannten Standes der Technik zu überwinden und einen Verbinder für zwei Bauteile zu schaffen, der auf kostengünstige, einfache und sichere Weise eine dauerhafte und feste Verbindung der Bauteile ergibt.

Dieses Ziel wird mit einem Verbinder für zwei Bauteile erreicht, von denen der erste Bauteil eine Nut mit einer diese querenden Bohrung hat, welcher Verbinder sich auszeichnet durch:
einen plattenförmigen ersten Beschlag mit einem Schlitz und einer diesen querenden ersten Öffnung, der in die Nut unter zumindest annähernder Ausrichtung der ersten Öffnung zur Bohrung eintauchbar ist,
einen am zweiten Bauteil verankerbaren zweiten Beschlag mit einem Schwert und einer dieses durchsetzenden zweiten Öffnung, welches in den Schlitz unter zumindest annähernder Ausrichtung der zweiten Öffnung zur ersten Öffnung einsteckbar ist, und
einen Bolzen mit konischem Ende, der durch Bohrung, erste und zweite Öffnung hindurchführbar ist, um diese genau aufeinander auszurichten,
wobei der Bolzen ein Schraubbolzen ist und die erste Öffnung und die zweite Öffnung jeweils ein Gewinde haben.

Der erfindungsgemäße Verbinder verwendet das Prinzip des Ausrichtens dreier Durchbrüche, u.zw. Bohrung, erste und zweite Öffnung, mittels eines gemeinsamen Bolzens, dessen konisches Ende während seines Hindurchführens die genaue Ausrichtung der Öffnungen und Bohrungen herbeiführt und so den einen Beschlag gegen den anderen spannt. Dazu wird die Lage der Öffnungen in den Beschlägen und jene der Bohrung im Bauteil so gewählt, dass in einer entspannten Anlagestellung der Beschläge aneinander deren Öffnungen geringfügig fehlausgerichtet sind und erst durch den hindurchtretenden Bolzen - unter Ausnützung der Grundelastizität des Materials der Beschläge und/oder des Bauteils - gegeneinander gepresst werden. Dies erzielt eine feste Verbindung, welche sich durch ihre internen Reibungs- und Klemmkräfte auch im Betrieb nicht lockert. Zusätzlich sind durch den die Bohrung und Öffnungen durchsetzenden Bolzen die Beschläge gegen ein Verrutschen in Nutlängsrichtung gesichert.

Bevorzugt hat das konische Ende des Bolzens einen Spitzenwinkel von 60° bis 120°, besonders bevorzugt etwa 90°. Dies erleichtert das Einführen des Bolzens in die zunächst nur annähernd ausgerichteten Öffnungen und Bohrung und das Erzwingen der genauen Ausrichtung (Fluchtung) während des Hindurchführens, bis der Bolzen vollständig eingeführt ist.

Gemäß der Erfindung ist der Bolzen ein Schraubbolzen und die erste Öffnung hat ein Gewinde. Dadurch wird ein krafterhöhendes Getriebe für das Vordringen des Bolzens in die Bohrung und Öffnungen für deren Ausrichtung geschaffen und eine zusätzliche Fixierung des Bolzens erreicht. Auch die zweite Öffnung hat erfindungsgemäß ein Gewinde, sodass die beiden Beschläge durch den Bolzen miteinander verschraubt werden.

In einer bevorzugten Ausführungsform der Erfindung ist das Schwert gegenüber dem restlichen zweiten Beschlag durch eine verringerte Plattendicke stufenförmig abgesetzt. Der zweite Beschlag kann so wahlweise auch einzeln, d.h. ohne einen ersten Beschlag, zur Verbindung mit einem ersten Bauteil verwendet werden: Der erste Bauteil hat dann eine besonders schmale Nut, die nur zur Aufnahme des Schwerts des zweiten Beschlags dient. Des Weiteren erlaubt die stufenförmige Absetzung des zweiten Beschlags ein flächiges Anliegen seiner Stufenfläche an der zugewandten Seite des ersten Beschlags, sodass die beiden Beschläge torsionsfest verbunden sind.

In einer weiteren bevorzugten Ausführungsform der Erfindung ist die erste Öffnung mit einem über die Plattenform des ersten Beschlags vorspringenden Kragen ausgestattet, welcher in der Bohrung verrasten kann. Der erste Beschlag kann bei seiner Montage am ersten Bauteil - beispielsweise beim kreisbogenförmigen Einschieben in die Nut - mit diesem Kragen von innen her in die Bohrung einschnappen und ist so gegen ein Verschieben in bzw. Herausgleiten aus der Nut gesichert.

Bevorzugt ist der Kragen mittels Stegen an seinem Außenumfang versteift, um seine Festigkeit zu erhöhen. Die Stege können auch als Rampen für das Aufweiten der Nut bis zum Einschnappen des Kragens in die Bohrung dienen.

Eine bevorzugte Ausführungsform des Verbinders für zwei Bauteile, von denen die Nut des ersten Bauteils an zumindest einer ihrer Nutflanken eine kreisbogenförmige Hinterschneidung hat, zeichnet sich dadurch aus, dass der erste Beschlag eine kreisbogenförmige Rippe zum Eingriff in die Hinterschneidung trägt. Zusammen mit der erfindungsgemäßen Verspannung der Beschläge über den Bolzen ergibt dies eine sehr stabile Verbindung der Bauteile.

Bevorzugt hat dabei der erste Beschlag in Richtung der ersten Öffnung gesehen etwa die Form eines Kreissektors, entlang dessen Kreisbogen die Rippe angeordnet ist. Der erste Beschlag lässt sich dadurch wie beschrieben in einer kreisbogenförmigen Bewegung in die Nut einschieben und taucht dann formschlüssig in diese ein.

Eine weitere bevorzugte Ausführungsform des Verbinders für zwei Bauteile, von denen auch der zweite Bauteil eine Nut mit einer kreisbogenförmigen Hinterschneidung an zumindest einer ihrer Nutflanken hat, zeichnet sich dadurch aus, dass auch der zweite Beschlag eine kreisbogenförmige Rippe zum Eingriff in die Hinterschneidung trägt. Auch hier ergeben sich die Vorteile einer sicheren Verankerung und eines einfachen Einsetzens durch eine kreisbogenförmige Eintauchbewegung.

Bevorzugt hat dabei auch der zweite Beschlag in Richtung der zweiten Öffnung gesehen etwa die Form eines Kreissektors, entlang dessen Kreisbogen die Rippe angeordnet ist, wobei von der Sehne des Kreissektors das Schwert wegragt. Der zweite Beschlag ist damit formschlüssig in die Nut des zweiten Bauteils einsenkbar, wobei das Schwert vom zweiten Bauteil vorragt.

In jeder der genannten Ausführungsformen können bevorzugt der erste und/oder der zweite Beschlag jeweils zumindest eine kreisbogenförmige Schneidkante zum Einschneiden in eine Nutflanke der Nut des ersten bzw. zweiten Bauteils tragen. Die Schneidkante schneidet eine zusätzliche Hinterschneidung in die Nut des Bauteils ein, was eine zusätzliche Zugverankerung quer zur Nutlängsrichtung und eine zusätzliche Klemmwirkung gegen ein Verschieben in Nutlängsrichtung ergibt.

Gemäß einem weiteren bevorzugten Merkmal der Erfindung ist zumindest einer der Teile Schwert und Schlitz mit einem Rastvorsprung, einer Federklammer oder einer federnden Rastklinke und der andere mit einer damit zusammenwirkenden Rastausnehmung ausgestattet, um das Schwert beim Einstecken in den Schlitz zu verrasten. Damit kann schon vor dem Hindurchführen des Bolzens eine temporäre Fixierung der mit den Beschlägen ausgestatteten Bauteile erreicht werden, was die Montage und das anschließende Hindurchführen des Bolzen zum Verspannen der Beschläge erleichtert.

Besonders vorteilhaft ist es, wenn der Schlitz in seinem Eingangsbereich einander gegenüberliegende Rastvorsprünge und das Schwert damit zusammenwirkende beidseitige Rastausnehmungen aufweist. Dies ergibt eine einfache und sichere Verrastung des Schwerts im Schlitz beim Verbinden der Beschläge.

Die Erfindung wird nachstehend anhand von in den beigeschlossenen Zeichnungen dargestellten Ausführungsformen näher erläutert. In den Zeichnungen zeigen:
Fig. 1 den Verbinder der Erfindung in einer teilweise zusammengesteckten Perspektivansicht;
Fig. 2 einen beispielhaften ersten Bauteil mit Nut und Bohrung zur Aufnahme des unteren Beschlags des Verbinders von Fig. 1 in einer Perspektivansicht;
Fig. 3 den oberen Beschlag des Verbinders von Fig. 1 in einer Seitenansicht;
Fig. 4 den unteren Beschlag des Verbinders von Fig. 1 in einer Seitenansicht;
Fig. 5 einen Querschnitt durch die teilweise zusammengesteckten Beschläge des Verbinders von Fig. 1 in einer Schnittansicht entlang der Schnittlinien V-V in den Fig. 3 und 4;
Fig. 6 einen Querschnitt durch den Öffnungsbereich der Beschläge des Verbinders der Fig. 1 bis 5 nach dem Zusammenstecken und vor dem Einführen des Bolzens;
Fig. 7 eine alternative Ausführungsform des unteren Beschlags des Verbinders der Fig. 1 bis 6; und
Fig. 8 die Einbaustellung des Verbinders der Fig. 1 bis 6 mit dem unteren Beschlag von Fig. 7 in einer teilweise aufgebrochenen Perspektivansicht vor dem Einführen des Bolzens.

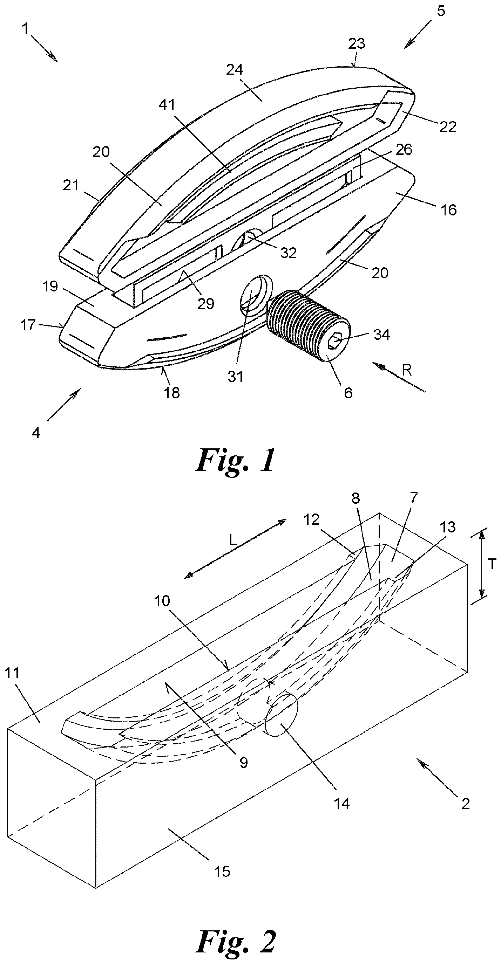

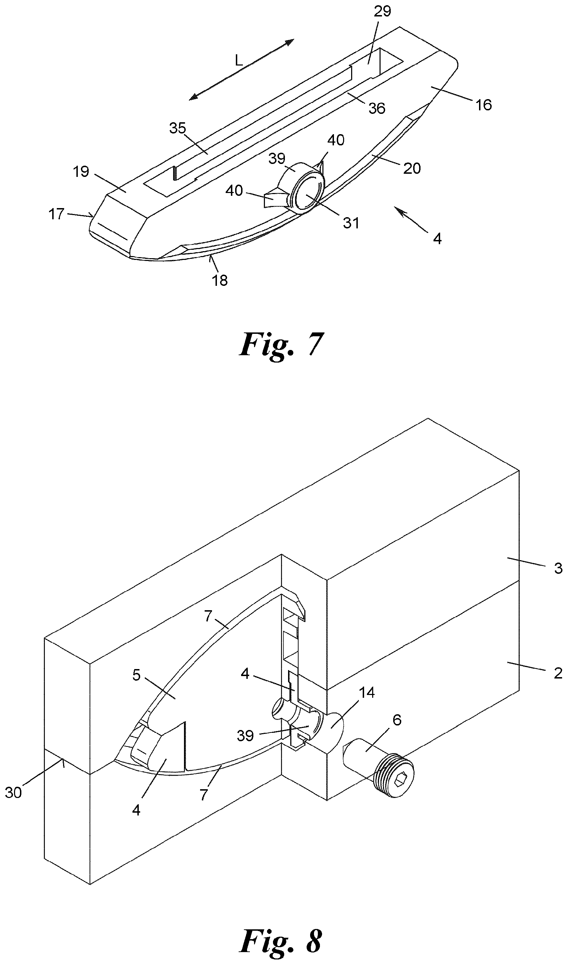

In den Fig. 1 bis 5 ist ein Verbinder 1 zum Verbinden zweier Bauteile 2, 3 (siehe Fig. 2, 8) gezeigt. Bei den Bauteilen 2, 3 kann es sich um jede beliebige Art von Bauteil aus jedem beliebigen Material handeln, sei es aus Holz, Metall, Kunststoff od.dgl.

Der Verbinder 1 ist besonders zum Verbinden von Holzbauteilen 2, 3 gedacht, beispielsweise im Möbelbau oder Industrieholzbau. Je nach den Festigkeitsanforderungen kann der Verbinder 1 seinerseits aus beliebigen Materialien gefertigt sein, beispielsweise aus Holz, Kunststoff, Metall oder Kombinationen daraus. Speziell für kleinformatige Verbinder 1 im Möbelbau kann der Verbinder 1 zur Gänze aus Kunststoff gefertigt sein, bei höheren Festigkeitsanforderungen, z.B. für tragende Konstruktionen im Industrieholzbau, kann der Verbinder zur Gänze aus Metall gefertigt sein.

Der Verbinder 1 setzt sich im Wesentlichen aus einem etwa platten- bzw. plättchenförmigen ersten Beschlag 4, einem etwa platten- bzw. plättchenförmigen zweiten Beschlag 5 und einem diese verspannenden Bolzen 6 zusammen. Der erste Beschlag 4 wird am ersten Bauteil 2 und der zweite Beschlag 5 am zweiten Bauteil 3 verankert. Durch Gegeneinanderspannen der Beschläge 4, 5 auf Zug mithilfe des Bolzens 6 werden die Bauteile 2, 3 fest - entweder dauerhaft oder lösbar - miteinander verbunden.

Zur Verankerung des ersten Beschlags 4 hat der erste Bauteil 2 eine Nut 7 mit einem etwa kreisbogenförmigen Nutgrund 8 und beidseitigen Nutflanken 9, 10 (Fig. 2). Die Nut 7 verläuft an der Oberseite 11 des Bauteils 2 in einer Nutlängsrichtung L und hat in ihrer Mitte ihre größte Tiefe T gemessen von der Oberseite 11 des Bauteils 2 zum Nutgrund 8. Die Nut 7 hat auf zumindest einer ihrer Nutflanken 9, 10, bevorzugt auf beiden Nutflanken 9, 10, jeweils eine kreisbogenförmige Hinterschneidung 12, 13.

Der Bauteil 2 ist ferner von einer die Nut 7 etwa normal zu deren Längsrichtung L querenden Bohrung 14 durchsetzt, und zwar so, dass die Bohrung 14 von zumindest einer Seite 15 des Bauteils 2 her zugänglich ist. Die Bohrung 14 kann den Bauteil 2 zur Gänze durchsetzen oder eine Sackbohrung sein, die von der Seite 15 bis in die Nut 7 reicht, d.h. deren eine Nutflanke 9 durchbricht und die gegenüberliegenden Nutflanke 10 entweder unberührt lässt oder in diese eintaucht.

Der erste Beschlag 4 ist an seinen Außenseiten komplementär zur Nut 7 ausgebildet und hat in einer Richtung R normal zu seiner Plattenform-Erstreckungsebene, d.h. normal zu seinen Lateralseiten 16, 17, gesehen etwa die Form eines Kreissektors, d.h. seine Umfangsform folgt auf seiner Unterseite 18 einem Kreisbogen und auf seiner Oberseite 19 einer Kreissehne. Auf seinen Lateralseiten 16, 17 hat der Beschlag 4 jeweils eine der Kreisbogenform seiner Unterseite 18 folgende vorstehende Rippe 20, 21. Mithilfe der Rippen 20, 21 kann der Beschlag 4 in einer kreisbogenförmigen Bewegung in die Nut 7 von deren einen Ende her eingeschoben werden, wobei die Rippen 20, 21 in die Hinterschneidungen 12, 13 eingreifen. In der vollständig eingeschobenen Stellung taucht der Beschlag 4 formschlüssig in die Nut 7 ein, wobei seine Oberseite 19 flächenbündig mit der Oberseite 11 des Bauteils 2 ist, in der die Nut 7 eingearbeitet ist.

Zur Verankerung des zweiten Beschlags 5 am zweiten Bauteil 3 kann im Wesentlichen dieselbe Konstruktion verwendet werden, d.h. der zweite Bauteil 3 (Fig. 8) ist mit einer gleichartigen Nut 7 mit kreisbogenförmigen Hinterschneidungen 12, 13 ausgestattet; eine querende Bohrung 14 ist im zweiten Bauteil 3 jedoch nicht erforderlich. Der zweite Beschlag 5 besitzt zur Verankerung in der Nut 7 des zweiten Bauteils 3 ebenfalls Platten- bzw. Plättchenform und hat in Richtung R normal auf seine Plattenform-Erstreckungsebene gesehen ebenfalls etwa die Form eines Kreissektors und kreisbogenförmige Rippen 20, 21 auf seinen Lateralseiten 22, 23, welche Rippen 20, 21 der Kreisbogenform seiner Oberseite 24 folgen. Von der Unterseite 25, der Sehne der Kreissektorform, ragt ein Schwert 26 vor, das zur Verbindung mit dem anderen Beschlag 4 dient.

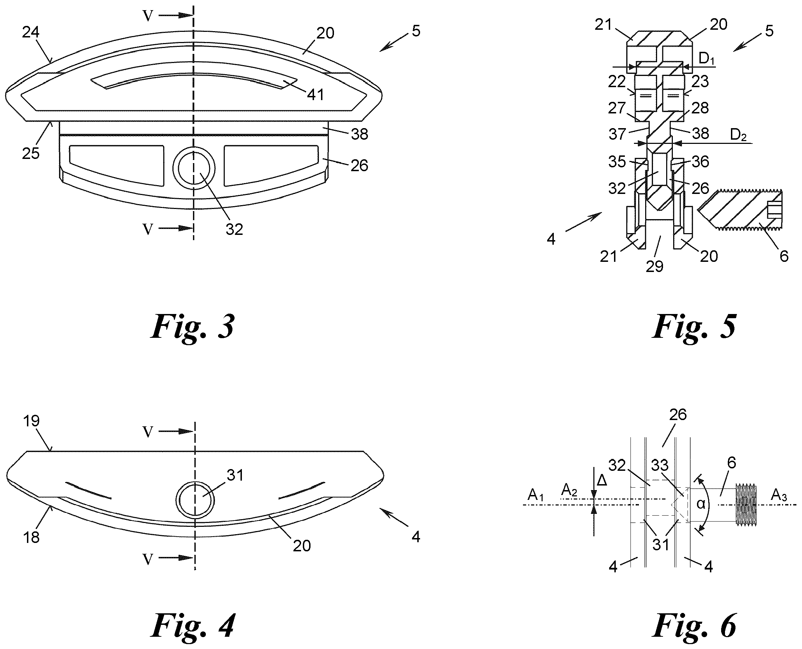

Das Schwert 26 des zweiten Beschlags 5 ist im Querschnitt (Fig. 5) gesehen gegenüber dem restlichen Beschlag 5 mittels Stufen 27, 28 auf den Lateralseiten 22, 23 abgesetzt, d.h. die Plattendicke D₂ des Schwerts 26 ist geringer als die Plattendicke D₁ des restlichen Beschlags 5.

Der erste Beschlag 4 hat einen zu dem Schwert 26 des zweiten Beschlags 5 komplementären Schlitz 29 (Fig. 7). Nach Verankerung der Beschläge 4, 5 in den Nuten 7 der Bauteile 2, 3 wird das Schwert 26 des Beschlags 5 in den Schlitz 29 des Beschlags 4 eingesteckt, bis die Stufen 27, 28 des Beschlags 5 an der Oberseite 19 des Beschlags 4 anschlagen. Wenn die Nuten 7 in die Bauteile 2, 3 so eingearbeitet sind, dass in der vollständig eingetauchten Stellung des Beschlags 5 im Bauteil 3 die Stufen 27, 28 flächenbündig mit jener Seite 30 des Bauteils 3 (Fig. 8), in welche die Nut 7 eingearbeitet ist, und die Oberseite 19 des Beschlags 4 flächenbündig mit der Oberseite 11 des Bauteils 2 ist, dann liegen gleichzeitig die Seiten 11 und 30 der Bauteile 2, 3 aneinander an.

Um in dieser Anlagestellung nun die beiden Beschläge 4, 5 und damit die Bauteile 2, 3 gegeneinander zu spannen bzw. zu pressen, dient der Bolzen 6. Der Bolzen 6 wird dazu über die Bohrung 14 im einen Bauteil 2 durch eine erste, den Schlitz 29 des ersten Beschlags 4 querende Öffnung 31 und eine zweite, das Schwert 26 des zweiten Beschlags 5 durchsetzende Öffnung 32 hindurchgeführt, siehe Fig. 6.

Die Öffnungen 31, 32 sind in den Beschlägen 4, 5 so angeordnet, dass sie während der Montage der Verbindung, wenn die Beschläge 4, 5 schon vollständig in die Nuten 7 der Bauteile 2, 3 eingetaucht sind, die Beschläge 4, 5 jedoch erst relativ lose aneinander anliegen, nur annähernd aufeinander ausgerichtet sind. In Fig. 6 ist diese annähernde Ausrichtung bzw. geringfügige Fehlausrichtung der Beschläge 4, 5 gezeigt: Die Achse A₁ der Öffnung 31 des ersten Beschlags 4 weicht geringfügig von der Achse A₂ der Öffnung 32 im Schwert 26 des zweiten Beschlags 5 ab, genauer liegt sie weiter vom Kreisbogenende (der Oberseite 24) des zweiten Beschlags 5 entfernt als dessen Achse A₂.

In dieser annähernden Ausrichtstellung wird nun der Bolzen 6 über die Bohrung 14 des ersten Bauteils 2 eingeführt. Der Bolzen 6 hat ein konisches Ende 33 und richtet durch dessen Wirkung als Gleitrampe bzw. Auflaufschräge die Öffnungen 31 und 32 (d.h. deren Achsen A₁ und A₂) untereinander sowie gegenüber der Achse A₃ der Bohrung 14 aus. Dies spannt die beiden Beschläge 4, 5 fest gegeneinander, gegebenenfalls auch unter Ausnützung der intrinsischen Elastizität des Materials, aus dem die Bauteile 2, 3 und die Beschläge 4, 5 gefertigt sind.

Der Bolzen 6 kann ein Steckbolzen oder - wie dargestellt - ein Schraubbolzen sein, für welchen die erste Öffnung 31, optional auch die zweite Öffnung 32, ein entsprechendes Gewinde hat. Falls gewünscht, könnte auch die Bohrung 14 mit einem entsprechenden Gewinde ausgestattet sein. Der Schraubbolzen 6 kann z.B. über einen Schraubenkopf oder (hier:) Imbus 34 von außerhalb des Bauteils 2 über die Bohrung 14 gedreht werden.

Um das Einführen des Bolzens 6 - sei es durch Einstecken oder Einschrauben - in die Öffnungen 31, 32 unter gleichzeitiger Ausrichtung derselben zu erleichtern, hat das konische Ende 33 des Bolzens 6 einen Spitzenwinkel α von beispielsweise 10° bis 150°, bevorzugt 30° bis 150°, besonders bevorzugt 60° bis 120°, und speziell etwa 90° wie in Fig. 6 gezeigt. Der Konusmantel des Konusendes 33 bildet damit eine Auflaufschräge bzw. -rampe für die zugewandten Ringkanten der Öffnungen 31 und 32, um den Bolzen 6 darin zu zentrieren, wie aus Fig. 6 ersichtlich.

Zur temporären gegenseitigen Fixierung der Beschläge 4, 5 vor dem Einführen des Bolzens 6 können die Beschläge 4, 5 mit ein oder mehreren Rastvorsprüngen, Federklammern, federnden Rastklinken od.dgl. und ein oder mehreren damit zusammenwirkenden Rastausnehmungen ausgestattet sein. Dadurch kann z.B. das Schwert 26 beim Einstecken in den Schlitz 29 verrastet ("eingeklipst") werden. In den Fig. 5 und 7 ist eine spezielle Ausgestaltung solcher Rastvorsprünge und Rastausnehmungen gezeigt, u.zw. in Form von sich in Längsrichtung L des Schlitzes 29 erstreckenden Rastvorsprüngen 35, 36 im Eingangsbereich des Schlitzes 29, welche in damit zusammenwirkende Rastausnehmungen 37, 38 auf beiden Lateralseiten des Schwerts 26 eingreifen können.

In den Fig. 7 und 8 ist eine weitere Ausführungsform des ersten Beschlags 4 gezeigt. Die Öffnung 31 des Beschlags 4 ist hier mit einem über die Plattenform des Beschlags 4, d.h. seine Lateralseite 16, vorspringenden Kragen 39 ausgestattet. Beim Einschieben des Beschlages 4 in die Bohrung 7 des Bauteils 2 in einer kreisbogenförmigen Bewegung rastet bzw. schnappt der Kragen 39 in der vollständig eingetauchten Stellung des Beschlags 4 vom Nutinneren her in die Bohrung 14 des Bauteils 2 ein und sichert so den Beschlag 4 gegen ein Verschieben in Nutlängsrichtung. Es versteht sich, dass die Höhe des Kragens 39 nur so groß sein sollte, dass sie eine vorübergehende elastische Aufweitung der Nut 7 bis zum Einschnappen des Kragens 39 in der Nut 14 gestattet, ohne die Nut 7 oder den Bauteil 2 zu beschädigen.

Der Kragen 39 kann mittels Stegen 40 an seinem Außenumfang versteift sein, die ihn gegenüber der Lateralseite 16 des Beschlags 4 abstützen. Die Stege 40 können auch als Gleitrampen in Richtung der kreisbogenförmigen Eintauchbewegung des Beschlags 4 ausgebildet sein, wie in Fig. 7 gezeigt.

Zur Verbesserung der Verankerung der Beschläge 4, 5 in den Nuten 7 der Bauteile 2, 3 kann jeder der Beschläge 4, 5 optional mit ein oder mehreren kreisbogenförmigen Schneidkanten 41 zum Einschneiden in eine oder beide Nutflanken 9, 10 der Nut 7 versehen sein. Die Schneidkanten 41 verlaufen beispielsweise auf den Lateralseiten 16, 17, 22, 23 der Beschläge 4, 5 konzentrisch und radial innerhalb der kreisbogenförmigen Rippen 20, 21.

Es versteht sich, dass die Beschläge 4, 5 auch auf andere Weise als in kreisbogenförmigen Nuten 7 mit kreisbogenförmigen Hinterschneidungen 12, 13 an den Bauteilen 2, 3 verankert werden können. Beispielsweise könnten die Nuten 7 keinen kreisbogenförmigen Nutgrund 8 haben, also z.B. rechteckige oder quadratische Taschen in den Bauteilen 2, 3 sein. Auch könnten die Nuten 7 keine kreisbogenförmigen Hinterschneidungen 12, 13 haben und die Rippen 20, 21 an den Beschlägen 4, 5 entfallen und letztere einfach in Richtung der Tiefe T der Nuten 7 in diese eingesteckt werden.

Schließlich ist es auch möglich, den mit dem Schwert 26 ausgestatteten Beschlag 5 ohne den Beschlag 4 zu verwenden, u.zw. einfach dadurch, dass das Schwert 26 in eine Nut 7 mit verringerter Breite D₂ eingesteckt, dann mit dem die Bohrung 14 und die Öffnung 32 durchsetzenden Bolzen 6 abgesteckt und so direkt mit dem gegenüberliegenden Bauteil 2 verspannt wird.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Verbinder für zwei Bauteile (2, 3), von denen der erste Bauteil (2) eine Nut (7) mit einer diese querenden Bohrung (14) hat, umfassend
einen plattenförmigen ersten Beschlag (4) mit einem Schlitz (29) und einer diesen querenden ersten Öffnung (31), der in die Nut (7) unter zumindest annähernder Ausrichtung der ersten Öffnung (31) zur Bohrung (14) eintauchbar ist,
einen am zweiten Bauteil (3) verankerbaren zweiten Beschlag (5) mit einem Schwert (26) und einer dieses durchsetzenden zweiten Öffnung (32), welches in den Schlitz (29) unter zumindest annähernder Ausrichtung der zweiten Öffnung (32) zur ersten Öffnung (31) einsteckbar ist, und
einen Bolzen (6) mit konischem Ende (33), der durch Bohrung (14), erste und zweite Öffnung (31, 32) hindurchführbar ist, um diese genau aufeinander auszurichten,
**dadurch gekennzeichnet, dass** der Bolzen (6) ein Schraubbolzen ist und die erste Öffnung (31) und die zweite Öffnung (32) jeweils ein Gewinde haben.

2. Verbinder nach Anspruch 1, **dadurch gekennzeichnet, dass** das konische Ende (33) einen Spitzenwinkel von 60° bis 120°, bevorzugt etwa 90°, hat.

3. Verbinder nach Anspruch 1 oder 2, **dadurch gekennzeichnet, dass** das Schwert (26) gegenüber dem restlichen zweiten Beschlag (5) durch eine verringerte Plattendicke (D₂) stufenförmig abgesetzt ist.

4. Verbinder nach einem der Ansprüche 1 bis 3, **dadurch gekennzeichnet, dass** die erste Öffnung (31) mit einem über die Plattenform des ersten Beschlags (4) vorspringenden Kragen (39) ausgestattet ist, welcher in der Bohrung (14) verrasten kann.

5. Verbinder nach Anspruch 4, **dadurch gekennzeichnet, dass** der Kragen (39) mittels Stegen (40) an seinem Außenumfang versteift ist.

6. Verbinder nach einem der Ansprüche 1 bis 5 für zwei Bauteile, von denen die Nut (7) des ersten Bauteils (2) an zumindest einer ihrer Nutflanken (9, 10) eine kreisbogenförmige Hinterschneidung (12, 13) hat, **dadurch gekennzeichnet, dass** der erste Beschlag (4) eine kreisbogenförmige Rippe (20, 21) zum Eingriff in die Hinterschneidung (12, 13) trägt.

7. Verbinder nach Anspruch 6, **dadurch gekennzeichnet, dass** der erste Beschlag (4) in Richtung der ersten Öffnung (31) gesehen etwa die Form eines Kreissektors hat, entlang dessen Kreisbogen die Rippe (20, 21) angeordnet ist.

8. Verbinder nach einem der Ansprüche 1 bis 7 für zwei Bauteile, von denen der zweite Bauteil (3) eine Nut (7) mit einer kreisbogenförmigen Hinterschneidung (12, 13) an zumindest einer ihrer Nutflanken (9, 10) hat, **dadurch gekennzeichnet, dass** der zweite Beschlag (5) eine kreisbogenförmige Rippe (20, 21) zum Eingriff in die Hinterschneidung (12, 13) trägt.

9. Verbinder nach Anspruch 8, **dadurch gekennzeichnet, dass** der zweite Beschlag (5) in Richtung der zweiten Öffnung (32) gesehen etwa die Form eines Kreissektors hat, entlang dessen Kreisbogen die Rippe (20, 21) angeordnet ist und von dessen Sehne das Schwert (26) wegragt.

10. Verbinder nach einem der Ansprüche 1 bis 9, **dadurch gekennzeichnet, dass** der erste Beschlag (4) und/oder der zweite Beschlag (5) jeweils zumindest eine kreisbogenförmige Schneidkante (41) zum Einschneiden in eine Nutflanke (9, 10) der Nut (7) des ersten bzw. zweiten Bauteils (2, 3) trägt.

11. Verbinder nach einem der Ansprüche 1 bis 10, **dadurch gekennzeichnet, dass** einer der Teile Schwert (26) und Schlitz (29) mit einem Rastvorsprung (35, 36), einer Federklammer oder einer federnden Rastklinke und der andere mit einer damit zusammenwirkenden Rastausnehmung (37, 38) ausgestattet ist, um das Schwert beim Einstecken in den Schlitz zu verrasten.

12. Verbinder nach Anspruch 11, **dadurch gekennzeichnet, dass** der Schlitz (29) in seinem Eingangsbereich einander gegenüberliegende Rastvorsprünge (35, 36) und das Schwert (26) damit zusammenwirkende beidseitige Rastausnehmungen (37, 38) aufweist.

## Claims

1. Connector for two components (2, 3), the first component (2) of which has a groove (7) with a bore (14) crossing the groove, comprising
a plate-shaped first fitting (4) with a slot (29) and a first opening (31) crossing the slot, which first fitting can be immersed into the groove (7) under an at least approximate alignment of the first opening (31) with the bore (14),
a second fitting (5) which can be anchored on the second component (3) and has a fin (26) and a second opening (32) passing through the fin (26), which fin (26) can be inserted into the slot (29) under an at least approximate alignment of the second opening (32) with the first opening (31), and
a bolt (6) which has a conical end (33) and can be passed through the bore (14), the first and the second opening (31, 32) in order to align them exactly with each other,
**characterized in that** the bolt (6) is a screw bolt and the first opening (31) and the second opening (32) are each threaded.

2. Connector according to claim 1, **characterized in that** the conical end (33) has an apex angle of 60° to 120°, preferably about 90°.

3. Connector according to claim 1 or 2, **characterized in that** the fin (26) is set off in relation to the rest of the second fitting (5) in a stepped manner by a reduced plate thickness (D₂).

4. Connector according to any one of claims 1 to 3, **characterized in that** the first opening (31) is equipped with a collar (39) which projects beyond the plate shape of the first fitting (4) and can latch in the bore (14).

5. Connector according to claim 4, **characterized in that** the collar (39) is reinforced on its outer circumference by means of webs (40).

6. Connector according to any one of claims 1 to 5 for two components, of which the groove (7) of the first component (2) has an undercut (12, 13) in the shape of an arc of a circle on at least one of its groove flanks (9, 10), **characterized in that** the first fitting (4) carries a rib (20, 21) in the shape of a circular arc for engagement in the undercut (12, 13).

7. Connector according to claim 6, **characterized in that** the first fitting (4), seen in the direction of the first opening (31), has approximately the shape of a sector of a circle, along the circular arc of which the rib (20, 21) is arranged.

8. Connector according to any one of claims 1 to 7 for two components, of which the second component (3) has a groove (7) with an undercut (12, 13) in the shape of an arc of a circle on at least one of its groove flanks (9, 10), **characterized in that** the second fitting (5) carries a rib (20, 21) in the shape of a circular arc for engagement in the undercut (12, 13) .

9. Connector according to claim 8, **characterized in that** the second fitting (5), seen in the direction of the second opening (32), has approximately the shape of a sector of a circle, along the circular arc of which the rib (20, 21) is arranged and from the chord of which the fin (26) protrudes.

10. Connector according to any one of claims 1 to 9, **characterized in that** the first fitting (4) and/or the second fitting (5) carry at least one cutting edge (41) in the shape of a circular arc for cutting into a groove flank (9, 10) of the groove (7) of the first or second component (2, 3), respectively.

11. Connector according to any one of claims 1 to 10, **characterized in that** one of the parts fin (26) and slot (29) has a latching projection (35, 36), a spring clip or a resilient latching pawl and the other one has a latching recess (37, 38) interacting therewith to latch the fin upon insertion into the slot.

12. Connector according to claim 11, **characterized in that** the slot (29) has latching projections (35, 36) lying opposite to one another in its entry region and the fin (26) has latching recesses (37, 38) on both sides interacting therewith.

## Revendications

1. Connecteur pour deux composants (2, 3), parmi lesquels le premier composant (2) a une rainure (7) avec un alésage (14) traversant celle-ci, comprenant
une première ferrure (4) en forme de plaque pourvue d'une fente (29) et d'un premier orifice (31) traversant celle-ci, laquelle première ferrure peut être introduite dans la rainure (7) sous l'alignement au moins approximatif du premier orifice (31) vis-à-vis de l'alésage (14),
une deuxième ferrure (5) pouvant être ancrée sur le deuxième composant (3) et ayant une lame (26) et un deuxième orifice (32) traversant celle-ci, laquelle lame peut être insérée dans la fente (29) sous l'alignement au moins approximatif du deuxième orifice (32) vis-à-vis du premier orifice (31), et
un boulon (6) avec une extrémité (33) conique, lequel boulon peut être passé à l'alésage (14) et aux premier et deuxième orifices (31, 32) afin de les aligner exactement les uns vis-à-vis des autres,
**caractérisé en ce que** le boulon (6) est un boulon à visser et le premier orifice (31) et le deuxième orifice (32) possèdent respectivement un filetage.

2. Connecteur selon la revendication 1, **caractérisé en ce que** l'extrémité (33) conique a un angle aigu de 60 ° à 120 °, de préférence d'environ 90 °.

3. Connecteur selon la revendication 1 ou 2, **caractérisé en ce que** la lame (26) est décalée en forme de gradin par une épaisseur de plaque (D₂) diminuée par rapport à la deuxième ferrure (5) restante.

4. Connecteur selon l'une des revendications 1 à 3, **caractérisé en ce que** le premier orifice (31) est équipé d'une collerette (39) dépassant par-dessus la forme de plaque de la première ferrure (4), laquelle collerette peut se verrouiller dans l'alésage (14).

5. Connecteur selon la revendication 4, **caractérisé en ce que** la collerette (39) est rigidifiée au moyen des étais (40) sur son périmètre extérieur.

6. Connecteur selon l'une des revendications 1 à 5 pour deux composants, parmi lesquels la rainure (7) du premier composant (2) a un renfoncement (12, 13) en forme d'arc de cercle au moins sur un de ses flancs de rainure (9, 10), **caractérisé en ce que** la première ferrure (4) porte une nervure (20, 21) en forme d'arc de cercle pour un engagement dans le renfoncement (12, 13).

7. Connecteur selon la revendication 6, **caractérisé en ce que** la première ferrure (4), vu dans la direction du premier orifice (31), a à peu près la forme d'un secteur circulaire le long de l'arc de cercle duquel est disposée la nervure (20, 21) .

8. Connecteur selon l'une des revendications 1 à 7 pour deux composants, parmi lesquels le deuxième composant (3) a une rainure (7) avec un renfoncement (12, 13) en forme d'arc de cercle au moins sur un de ses flancs de rainure (9, 10), **caractérisé en ce que** la deuxième ferrure (5) porte une nervure (20, 21) en forme d'arc de cercle pour un engagement dans le renfoncement (12, 13).

9. Connecteur selon la revendication 8, **caractérisé en ce que** la deuxième ferrure (5), vu dans la direction du deuxième orifice (32), a à peu près la forme d'un secteur circulaire le long de l'arc de cercle duquel est disposée la nervure (20, 21) et à partir de la corde duquel la lame (26) est en saillie.

10. Connecteur selon l'une des revendications 1 à 9, **caractérisé en ce que** la première ferrure (4) et/ou la deuxième ferrure (5) porte au moins un bord de coupe (41) en forme d'arc de cercle permettant de couper dans un flanc de rainure (9, 10) de la rainure (7) du premier ou du deuxième composant (2, 3), respectivement.

11. Connecteur selon l'une des revendications 1 à 10, **caractérisé en ce qu'**une des parties, lame (26) et fente (29), est pourvue d'une protubérance de verrouillage (35, 36), d'une pince à ressort ou d'un verrou à ressort, et l'autre est pourvue d'un renfoncement de verrouillage (37, 38) agissant conjointement afin de verrouiller la lame lors de l'insertion dans la fente.

12. Connecteur selon la revendication 11, **caractérisé en ce que** la fente (29) présente des protubérances de verrouillage (35, 36) situées opposées l'une à l'autre dans sa zone d'entrée et la lame (26) présente des renfoncements de verrouillage (37, 38) des deux côtés agissant conjointement avec celles-ci.
